(19) Europäisches Patentamt
European Patent Office
Office européen des brevets

(11) EP 1 187 244 A2

(12) EUROPÄISCHE PATENTANMELDUNG

(43) Veröffentlichungstag:
**13.03.2002 Patentblatt 2002/11**

(51) Int Cl.[7]: **H01M 10/40**, H01G 9/02

(21) Anmeldenummer: **01118762.2**

(22) Anmeldetag: **08.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **07.09.2000 US 230711 P**

(71) Anmelder: **MERCK PATENT GmbH**
**64293 Darmstadt (DE)**

(72) Erfinder:
- **Jungnitz, Michael**
  **63225 Langen (DE)**
- **Schmidt, Michael, Dr.**
  **64342 Seeheim-Jugenheim (DE)**
- **Kühner, Andreas, Dr.**
  **64289 Darmstadt (DE)**
- **Buchholz, Herwig, Dr.**
  **60599 Frankfurt (DE)**
- **Prakash, Surya, Prof.**
  **Hacienda Heights, CA 91745 (US)**

# (54) Organische Amine als Additive in elektrochemischen Zellen

(57) Die Erfindung betrifft die Verwendung von Additiven zur Verringerung des Säuregehalts in aprotischen Elektrolytsystemen in elektrochemischen Zellen, insbesondere in Lithium-Ionen-Batterien, und eine elektrochemische Zelle mit einem aprotischen Elektrolytsystem, das ein Additiv zur Verringerung des Säuregehalts des Elektrolytsystems enthält.

EP 1 187 244 A2

## Beschreibung

Die Erfindung betrifft die Verwendung von Additiven zur Verringerung des Säuregehalts in aprotischen Elektrolytsystemen in elektrochemischen Zellen, insbesondere in Lithium-Ionen-Batterien, und eine elektrochemische Zelle mit einem aprotischen Elektrolytsystem, das ein Additiv zur Verringerung des Säuregehalts des Elektrolytsystems enthält.

Elektrochemische Zellen werden verwendet, um chemische Energie in elektrische Energie bzw. elektrische Energie in chemische Energie umzuwandeln. In beiden Fällen finden chemische Reaktionen statt, die mit der Wanderung von elektrischen Ladungen oder mit dem Auftreten von elektrischen Potentialen verbunden sind. Beispiele für elektrochemische Zellen, in denen die Energieumwandlung reversibel durchgeführt werden kann, umfassen Sekundärbatterien (bzw. Akkumulatoren) und Doppelschichtkondensatoren.

Sekundärbatterien werden vor allem in tragbaren elektronischen Vorrichtungen, wie z.B. in mobilen Telefonen, Computern, CD-Playern und Camcordern, verwendet. Sekundärbatterien für derartige Anwendungen müssen sich durch eine hohe Energiedichte, eine hohe Kapazität, eine hohe Zellenspannung, eine geringe Selbstentladung, eine lange Lebensdauer, ein geringes Gewicht sowie durch hervorragende Ladungs- und Entladungseigenschaften auszeichnen. In den vergangenen Jahren wurden Lithium-Ionen-Batterien entwickelt, welche die zuvor genannten Anforderungen erfüllen.

Lithium-Ionen-Batterien umfassen eine negative Elektrode mit einem Material, das reversibel Lithiumionen aufnehmen und wieder abgeben kann, wie z.B. Graphit, eine positive Elektrode mit einem Lithium-Übergangsmetall-Oxid, wie z.B. Lithiummanganoxid, Lithiumkobaltoxid oder Lithiumnickeloxid, sowie ein aprotisches Elektrolytsystem. Lithium-Ionen-Batterien, die typische 4 V-Systeme sind, enthalten im Gegensatz zu Lithiumbatterien, die den 3 V-Systemen angehören, kein metallisches Lithium.

Die chemischen Reaktionen, die beim Laden bzw. Entladen einer Lithium-Ionen-Batterie an der positiven Elektrode und an der negativen Elektrode ablaufen, können z.B für eine Zelle, die $LiCoO_2$ als Material für die positive Elektrode und Graphit als Material für die negative Elektrode umfaßt, wie folgt angegeben werden:

$$\text{positive Elektrode:}\quad LiCoO_2 \underset{\text{Entladen}}{\overset{\text{Laden}}{\rightleftarrows}} Li_{1-x}CoO_2 + xLi^+ + xe^-$$

$$\text{negative Elektrode:}\quad C + xLi^+ + xe^- \underset{\text{Entladen}}{\overset{\text{Laden}}{\rightleftarrows}} CLi_x$$

$$\text{Gesamtbilanz:}\quad LiCoO_2 + C \underset{\text{Entladen}}{\overset{\text{Laden}}{\rightleftarrows}} Li_{1-x}CoO_2 + CLi_x$$

Beim Laden der Lithium-Ionen-Batterie wird Lithium reversibel in das Graphitmaterial eingelagert. Dieser Vorgang ist in Figur 1 dargestellt.

Die Elektrolytsysteme, die in Lithium-Ionen-Batterien verwendet werden, umfassen gewöhnlich ein aprotisches organisches Lösungsmittel, wie z.B. Ethylencarbonat, Propylencarbonat, Dimethylcarbonat, $\gamma$-Butyrolacton, DMF oder THF, oder ein Lösungsmittelgemisch, wie z.B. Ethylencarbonat/Dimethylcarbonat (EC/DMC), und ein darin lösliches Leitsalz, wie z.B. $LiPF_6$.

Solche Systeme enthalten, bedingt durch den Herstellungsprozeß der Komponenten des Elektrolytsystems, im allgemeinen Spurenmengen an Wasser, das mit dem Leitsalz unter Bildung von Säure reagiert. $LiPF_6$ wird beispielsweise wie folgt zersetzt:

$$LiPF_6 + H_2O \rightarrow LiF + POF_3 + 2HF$$

Hierzu kommt ein herstellungsbedingter Säuregehalt im ppm-Bereich, wie z.B. ein HF-Gehalt von mindestens 50 ppm in $LiPF_6$.

Die entstandene Säure reagiert weiter mit den Komponenten der elektrochemischen Zelle und zersetzt z.B.

die Deckschicht der Elektroden in der elektrochemischen Zelle.

An Graphitelektroden besteht die Deckschicht hauptsächlich aus Alkylcarbonaten, $Li_2CO_3$, LiOH und $Li_2O$. HF reagiert z.B. mit diesem Film wie folgt:

$$Li_2CO_3 + 2HF \rightarrow 2LiF + H_2CO_3$$

$$LiOH + HF \rightarrow LiF + H_2O$$

$$Li_2O + 2HF \rightarrow 2LiF + H_2O$$

Der ursprüngliche Film wird somit durch einen LiF-haltigen Film ersetzt, der im Gegensatz zum ursprünglichen Film den Durchtritt von Lithiumionen beeinträchtigt bzw. verhindert, so daß die Impedanz der Batterie ansteigt, was zu einer Verringerung der Leistungsfähigkeit der Batterie führt.

Weiterhin löst die Säure, wie z.B. HF, Metalle aus hochoxidierenden Elektrodenmaterialien, wie z.B. aus $LiMn_2O_4$, heraus, so daß ein ständiger Verlust an aktivem Elektrodenmaterial und dadurch ein ständiger Kapazitätsverlust auftritt, was zu einer Verringerung der Anzahl der möglichen Ladungs/Entladungs-Zyklen der Batterie führt:

$$4H^+ + 2LiMn^{3+}Mn^{4+}O_4 \rightarrow 3MnO_2 + Mn^{2+} + 2Li^+ + 2H_2O$$

Die zuvor beschriebenen Probleme, die sich durch das Ansteigen des Säuregehalts ergeben, treten nicht nur in Lithium-Ionen-Batterien, sondern auch in allen anderen elektrochemischen Zellen mit einem aprotischen Elektrolytsystem auf, und zwar unabhängig von der Art des eingesetzten Leitsalzes und der Art der Elektroden.

In der US-PS 5 316 876 wird eine Lithium-Ionen-Batterie mit einem aprotischen Elektrolytsystem beschrieben, das einen zyklischen Ester und ein tertiäres Amin enthält. Das Amin wird zugegeben, um eine Zersetzung des zyklischen Esters beim Laden der Batterie zu verhindern.

Die EP-A-785 586 beschreibt eine Lithium-Ionen-Batterie, die eine negative Elektrode mit einer amorphen Chalcogenverbindung und/oder einem amorphen Oxid, eine positive Elektrode mit einem Material, das reversibel Lithium absorbieren und freisetzen kann, und ein aprotisches Elektrolytsystem umfaßt. Das Elektrolytsystem enthält eine Stickstoff enthaltende Verbindung, wie z.B. ein Amin, welche die Ladungs- und Entladungseigenschaften der Batterie verbessert. Die Elektroden können einen Bestandteil, der die Leitfähigkeit der Elektroden erhöht, wie z.B. Kohlenstoff, enthalten.

In der US-PS 5 846 673 wird eine Lithium-Ionen-Batterie beschrieben, die ein aprotisches Elektrolytsystem mit einem fluoridhaltigen Lithiumleitsalz, wie z.B. $LiBF_4$, $LiAsF_6$ oder $LiPF_6$, und einer basischen Verbindung, wie z.B. einem Alkylamin, bevorzugt Tributylamin, umfaßt. Die basische Verbindung wird zugegeben, um den Gehalt an HF, der bei der Hydrolyse des fluoridhaltigen Lithiumleitsalzes entsteht, zu verringern.

Tributylamin kann den HF-Gehalt zwar effektiv verringern, ist jedoch elektrochemisch nicht oxidationsbeständig und wird ab ca. 3,3 V gegen $Li/Li^+$ irreversibel zersetzt. Dieses Potential ist für den Einsatz in 4 V-Systemen, in denen hochoxidierende Elektrodenmaterialien, wie z.B. $LiMn_2O_4$, $LiCoO_2$, $LiNiO_2$ oder $Li(CoNi)O_2$ verwendet werden, deutlich zu gering.

Folglich ist es erforderlich, die basische Verbindung, wie z.B. das Alkylamin, durch Additive, die in 4 V-Systemen oxidationsbeständig sind, zu ersetzen. Diese Additive sollten die folgenden Kriterien erfüllen:

1) Additive, die Säure im Elektrolytsystem binden, sollten Lewis-Basen (Elektronenpaar-Donatoren) sein. Ein Kriterium für die Stärke einer Lewis-Base ist der pKs-Wert. Der pKs-Wert der Additive sollte über 10 liegen;

2) Additive, die Säure im Elektrolytsystem binden, dürfen keine protischen Verunreinigungen (wie z.B. Wasser) in das Elektrolytsystem einbringen;

3) Die Additive sollten im Elektrolytsystem löslich sein; und

4) Additive, die Säure im Elektrolytsystem binden, müssen elektrochemisch beständig sein. Im Zyklovoltammogramm sollte das Elektrolytsystem im reduktiven und oxidativen Bereich beständig sein. Ein Zyklovoltammogramm an einer Pt-Elektrode darf daher im Bereich von 0 bis 4,3 V (gegen Lithium) keinen zusätzlichen Peak aufweisen.

Aufgabe der vorliegenden Erfindung ist es, die Leistungsfähigkeit, insbesondere die Lebensdauer und die Ladungs- und Entladungseigenschaften, von elektrochemischen Zellen, wie z.B. Lithium-Ionen-Batterien, die ein aprotisches Elektrolytsystem mit einem Leitsalz enthalten, zu verbessern.

Diese Aufgabe wird erfindungsgemäß durch die Verwendung von Additiven der allgemeinen Formel (I)

$$NR^1R^2R^3 \qquad (I)$$

worin

$R^1$ und $R^2$ H, $C_yF_{2y+1-z}H_z$ oder $(C_nF_{2n-m}H_m)X$, wobei X ein aromatischer oder heterozyklischer Rest ist, bedeuten und

$R^3$ $(C_nF_{2n-m}H_m)Y$, wobei Y ein heterozyklischer Rest ist, oder $(C_oF_{2o-p}H_p)Z$, wobei Z ein aromatischer Rest ist, bedeutet,

und wobei n, m, o, p, y und z die folgenden Bedingungen erfüllen:

$0 \leq n \leq 6$,
$0 \leq m \leq 2n$,
$2 \leq o \leq 6$,
$0 \leq p \leq 2o$,
$1 \leq y \leq 8$ und
$0 \leq z \leq 2y+1$,

zur Verringerung des Säuregehalts in aprotischen Elektrolytsystemen in elektrochemischen Zellen gelöst.

Die Erfindung stellt ebenfalls eine elektrochemische Zelle bereit, umfassend eine Anode, eine Kathode und ein aprotisches Elektrolytsystem, das ein Additiv der allgemeinen Formel (I) enthält.

Diese elektrochemische Zelle kann z.B. als Aufbaueinheit einer Lithium-Ionen-Batterie oder als Aufbaueinheit eines Doppelschichtkondensators verwendet werden.

Die Additive der allgemeinen Formel (I) erfüllen die zuvor genannten Kriterien (1) bis (4).

Überraschenderweise wurde gefunden, daß die erfindungsgemäß verwendeten organischen Amine mit aromatischen oder heterozyklischen Gruppen deutlich oxidationsbeständiger als aliphatische Amine sind. So besitzt z.B. 4-(N,N'-Dimethylamino)pyridin (DMAP) ein um etwa 0,9 bis 1,0 V höheres Oxidationspotential als das in der US-PS 5 846 673 beschriebene Tributylamin. Die erfindungsgemäß verwendeten Amine können Säuren im Elektrolytsystem quantitativ abfangen.

Die Gruppen, die in der allgemeinen Formel (I) durch $R^1$, $R^2$ und $R^3$ dargestellt sind, können substituiert oder unsubstituiert sein.

$R^1$ und $R^2$ bedeuten bevorzugt H, eine Alkylgruppe (wie z.B. eine Methylgruppe, eine Ethylgruppe, eine n-Propylgruppe, eine Isopropylgruppe, eine n-Butylgruppe, eine Pentylgruppe, eine Hexylgruppe, eine Heptylgruppe oder eine Octylgruppe), eine fluorierte Alkylgruppe (wie z.B. eine Monofluorethylgruppe, eine Difluorethylgruppe, eine Trifluorethylgruppe oder eine Trifluorpropylgruppe), eine Aralkylgruppe (wie z.B. eine Benzylgruppe) oder eine Arylgruppe (wie z.B. eine Phenylgruppe oder eine Naphthylgruppe). Die heterozyklische Gruppe, die durch $R^1$, $R^2$ und $R^3$ dargestellt ist, ist bevorzugt eine Pyridylgruppe oder eine Pyrazylgruppe. Beispiele für fluorierte Gruppen umfassen eine Fluorpyridylgruppe, eine Fluorbenzylgruppe und eine Perfluorpyridylgruppe.

Beispiele für die Additive umfassen 2-Phenylethylamin, 2-Phenylpropylamin, 3-Phenylpropylamin, 2-Phenylbutylamin, 3-Phenylbutylamin, 4-Phenylbutylamin, 2-Phenylethyl-N-methylamin, 2-Phenylpropyl-N-methylamin, 3-Phenylpropyl-N-methylamin, 2-Phenylbutyl-N-methylamin, 3-Phenylbutyl-N-methylamin, 4-Phenylbutyl-N-methylamin, 2-Phenylethyl-N-ethylamin, 2-Phenylpropyl-N-ethylamin, 3-Phenylpropyl-N-ethylamin, 2-Phenylbutyl-N-ethylamin, 3-Phenylbutyl-N-ethylamin, 4-Phenylbutyl-N-ethylamin, 2-Phenylethyl-N,N-dimethylamin, 2-Phenylpropyl-N,N-dimethylamin, 3-Phenylpropyl-N,N-dimethylamin, 2-Phenylbutyl-N,N-dimethylamin, 3-Phenylbutyl-N,N-dimethylamin, 4-Phenylbutyl-N,N-dimethylamin, 2-Phenylethyl-N,N-diethylamin, 2-Phenylpropyl-N,N-diethylamin, 3-Phenylpropyl-N,N-diethylamin, 2-Phenylbutyl-N,N-diethylamin, 3-Phenylbutyl-N,N-diethylamin, 4-Phenylbutyl-N,N-diethylamin, N,N-Dimethylaminopyridin, N,N-Dimethylaminopyrazin, N,N-Diethylaminopyridin und N,N-Diethylaminopyrazin. 4-Phenylbutylamin und N,N-Dimethylaminopyridin werden besonders bevorzugt verwendet.

Die Additive werden bevorzugt in einer Menge von bis zu 10 Gew% und besonders bevorzugt in einer Menge im Bereich von 0,01 bis 5 Gew% verwendet, bezogen auf das Gewicht des Elektrolytsystems.

Das Elektrolytsystem der elektrochemischen Zelle umfaßt weiterhin ein aprotisches Lösungsmittel sowie ein darin gelöstes Leitsalz.

Beispiele für bevorzugte Lösungsmittel umfassen Ethylencarbonat, Propylencarbonat, Butylencarbonat, Dimethylcarbonat, Diethylcarbonat, Methylethylcarbonat, γ-Butyrolacton, Methylformiat, Methylacetat, 1,2-Dimethoxyethan, Tetrahydrofuran, 2-Methyltetrahydrofuran, Dimethylsulfoxid, 1,3-Dioxolan, Formamid, Dimethylformamid, Dioxolan, Dioxan, Acetonitril, Nitromethan, Phosphorsäuretriester, Trimethoxymethan, Dioxolanderivate, Sulfolan, 3-Methyl-2-oxazolidinon, Propylencarbonatderivate und Tetrahydrofuranderivate. Lösungsmittelgemische, wie z.B. Ethylencarbonat/Dimethylcarbonat (EC/DMC) können ebenfalls verwendet werden.

Beispiele für geeignete Leitsalze umfassen Salze mit einem Anion, ausgewählt aus der Gruppe, bestehend aus $BF_4^-$, $PF_6^-$, $AsF_6^-$, $SbF_6^-$, $ClO_4^-$, $N(SO_2C_nF_{2n+1-m}H_m)_2^-$, $C(SO_2C_nF_{2n+1-m}H_m)_3^-$, $O(SO_2C_nF_{2n+1-m}H_m)^-$ und $[PF_{6-p}(C_nF_{2n+1-m}H_m)_p]^-$ mit $0 \leq 0 \leq 6$, $0 \leq m < 2n+1$ und $0 \leq p \leq 5$. Das Kation des Leitsalzes kann ein Alkalimetallion, wie z. B. $Li^+$, $Na^+$, $K^+$, $Rb^+$ oder $Cs^+$, oder ein Oniumion, wie z.B. $NH_4^+$, sein.

Die Leitsalze werden bevorzugt in einer Konzentration im Bereich von 0,01 bis 3 Mol/l und besonders bevorzugt in einer Konzentration im Bereich von 0,1 bis 2 Mol/l eingesetzt.

Die Additive der allgemeinen Formel (I) können z.B. verwendet werden, um den Säuregehalt im Elektrolytsystem einer Lithium-Ionen-Batterie zu verringern.

Die negative Elektrode einer Lithium-Ionen-Batterie umfaßt ein Material, das reversibel Lithiumionen aufnehmen und wieder abgeben kann, wie z.B. Graphit. Die positive Elektrode einer Lithium-Ionen-Batterie umfaßt ein Lithium-Übergangsmetall-Oxid. Bevorzugte Übergangsmetalle umfassen Ti, V, Cr, Mn, Fe, Co, Ni, Mo und W. Bevorzugte Lithium-Übergangsmetall-Oxide umfassen $LiCoO_2$, $LiNiO_2$, $LiMnO_2$, $LiMn_2O_4$, $Li(CoNi)O_2$, $Li(CoV)O_2$ und $Li(CoFe)O_2$.

Die Elektroden der Lithium-Ionen-Batterie können weitere Additive enthalten, wie z.B. Bestandteile, die die Leitfähigkeit erhöhen, Bindemittel, Dispergiermittel, Füllstoffe und ionenleitfähige Materialien. Es können z.B. die Additive verwendet werden, die in der EP-A-785 586 beschrieben sind.

Die Additive können in Elektrolyten mit herkömmlichen Leitsalzen verwendet werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ B^-(OR^1)_m(OR^2)_p$$

worin,

m und p  0, 1, 2, 3 oder 4 mit m+p=4 und
$R^1$ und $R^2$  gleich oder verschieden sind,

gegebenenfalls durch eine Einfach- oder Doppelbindung direkt miteinander verbunden sind,
jeweils einzeln oder gemeinsam die Bedeutung eines aromatischen oder aliphatischen Carbon-, Dicarbon- oder Sulfonsäurerestes haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,
haben und
Hal F, Cl oder Br
und
A Alkyl mit 1 bis 6 C-Atomen, das ein- bis dreifach halogeniert
sein kann, bedeuten. Ebenso geeignet sind Alkalialkoholate der allgemeinen Formel

$$Li^+ OR^-$$

worin R
die Bedeutung eines aromatischen oder aliphatischen Carbon-, Dicarbon- oder Sulfonsäurerestes hat, oder

die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder
die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder
die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann, hat und
Hal F, Cl, oder Br,
und
A Alkyl mit 1 bis 6 C-Atomen, das ein- bis dreifach halogeniert sein kann.
Auch Lithiumkomplexsalze der Formel

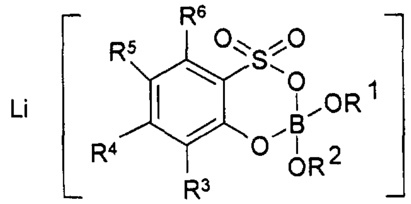

wobei
$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen heterozyklischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,
$R^3$-$R^6$ können jeweils einzeln oder paarweise, gegebenenfalls durch eine Einfach- oder Doppelbindung direkt miteinander verbunden, folgende Bedeutung haben:
1. Alkyl ($C_1$ bis $C_6$),Alkyloxy ($C_1$ bis $C_6$) oder Halogen (F, Cl, Br)
2. ein aromatischer Ring aus den Gruppen
Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,
die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,
b) das Zwischenprodukt aus a) mit Chlortrimethylsilan umgesetzt, filtriert und fraktioniert destilliert wird,
c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Ebenso können die Elektrolyte Verbindungen der folgenden Formel (DE 199 41 566)

$$[([R^1(CR^2R^3)_k]_lA_x)_yKt]^+ \ N(CF_3)_2$$

wobei

Kt= N, P, As, Sb, S, Se
A= N, P, P(O), O, S, S(O), $SO_2$, As, As(O), Sb, Sb(O)

$R^1$, $R^2$ und $R^3$ gleich oder verschieden
H, Halogen, substituiertes und/oder unsubstituiertes Alkyl $C_nH_{2n+1}$, substituiertes und/oder unsubstituiertes Alkenyl

mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,
A kann in verschiedenen Stellungen in $R^1$, $R^2$ und/oder $R^3$ eingeschlossen sein,
Kt kann in cyclischen oder heterocyclischen Ring eingeschlossen sein,
die an Kt gebundenen Gruppen können gleich oder verschieden sein
mit

n= 1-18
m= 3-7
k= 0, 1-6
l= 1 oder 2 im Fall von x=1 und 1 im Fall x=0
x= 0,1
y= 1-4

bedeuten, enthalten. Das Verfahren zur Herstellung dieser Verbindungen ist dadurch gekennzeichnet, daß ein Alkalisalz der allgemeinen Formel

$$D^{+}\ {}^{-}N(CF_3)_2 \qquad (II)$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E \qquad (III)$$

wobei
Kt, A, $R^1$, $R^2$, $R^3$, k, l, x und y die oben angegebene Bedeutung haben und
$^{-}E$ $F^-$, $Cl^-$, $Br^-$, $I^-$, $BF_4^-$, $ClO_4^-$, $AsF_6^-$, $SbF_6^-$ oder $PF_6^-$
bedeutet, umgesetzt wird.

Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, m≠0 |
| n | 1-9 |
| k | 0, falls m=0 und k=1, falls m=1-9, |

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{x+}[EZ]^{y-}_{x/y}$$

worin bedeuten:

x,y 1,2,3,4,5,6
$M^{x+}$ ein Metallion

E eine Lewis-Säure, ausgewählt aus der Gruppe

$BR^1R^2R^3$, $AlR^1R^2R^3$, $PR^1R^2R^3R^4R^5$, $AsR^1R^2R^3R^4R^5$, $VR^1R^2R^3R^4R^5$,
$R^1$ bis $R^5$ gleich oder verschieden, gegebenenfalls durch eine Einfach- oder Doppelbildung direkt miteinander verbunden sind, jeweils einzeln oder gemeinsam die Bedeutung eines Halogens (F, Cl, Br),
eines Alkyl- oder Alkoxyrestes ($C_1$ bis $C_8$) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann
eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.
Auch Boratsalze (DE 199 59 722) der allgemeinen Formel

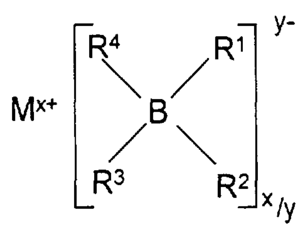

worin bedeuten:

M ein Metallion oder Tetraalkylammoniumion
x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.
Die Additive können auch in Elektrolyte eingesetzt werden, die Lithiumfluoralkylphosphate der allgemeinen Formel (I) enthalten,

$$Li^+[PF_x(C_yF_{2y+1-z}H_z)_{6-x}]^- \quad (I)$$

worin

$1 \le x \le 5$
$3 \le y \le 8$
$0 \le z \le 2y+1$

bedeuten und die Liganden ($C_yF_{2y+1-z}H_z$) gleich oder verschieden sein können, wobei die Verbindungen der allgemeinen Formel (I'),

$$Li^+[PF_a(CH_bF_c(CF_3)_d)_e]^- \quad (I')$$

in der a eine ganze Zahl von 2 bis 5, b = 0 oder 1, c = 0 oder 1, d = 2 und e eine ganze Zahl von 1 bis 4 bedeuten, mit den Bedingungen, daß b und c nicht gleichzeitig jeweils = 0 bedeuten und die Summe aus a + e gleich 6 ist und die Liganden $(CH_bF_c(CF_3)_d)$ gleich oder verschieden sein können, ausgenommen sind (DE 100 089 55). Das Verfahren zur Herstellung von Lithiumfluoralkylphosphaten der allgemeinen Formel (I) ist dadurch gekennzeichnet, daß wenigstens eine Verbindung der allgemeinen Formel

$$H_mP(C_nH_{2n+1})_{3-m} \qquad (III),$$

$$OP(C_nH_{2n+1})_3 \qquad (IV),$$

$$Cl_mP(C_nH_{2n+1})_{3-m} \qquad (V),$$

$$F_mP(C_nH_{2n+1})_{3-m} \qquad (VI),$$

$$Cl_oP(C_nH_{2n+1})_{5-o} \qquad (VII),$$

$$F_oP(C_nH_{2n+1})_{5-o} \qquad (VIII),$$

in denen jeweils
$0 \leq m \leq 2$, $3 \leq n \leq 8$ und $0 \leq o \leq 4$ bedeutet,
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz der allgemeinen Formel (I) nach den üblichen Methoden gereinigt und isoliert wird.

Die Additive können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,
b) die Suspension mit Kohlenwasserstoffen mit $C_5$-$C_{12}$ emulgiert werden,
c) die Emulsion auf die Metall- oder Legierungskerne aufgefällt werden und
d) durch Temperung des Systems die Metallhydroxide bzw. -oxihydroxide in das entsprechende Oxid übergeführt werden.

Die Additive können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Additive in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden.

Die folgenden Beispiele erläutern die Erfindung.

BEISPIEL 1

Herstellung von Elektrolytlösungen mit Aminen

2 bzw. 5 Gew% der in Tabelle 1 angegebenen Amine wurden in einem Ausgangselektrolyten (1M $LiPF_6$ in EC:DMC (1:1); HF-Gehalt des Ausgangselektrolyten: 100 ppm) gelöst. Die Lösungen wurden 3 Stunden lang bei Raumtemperatur gerührt, und dann wurde der HF-Gehalt der jeweiligen Elektrolyte gemessen.

Tabelle 1

| Additiv | HF-Gehalt nach 3-stündigem Rühren | Oxidationsbeständigkeit gegen $Li/Li^+$ |
|---|---|---|
| 4-Phenylbutylamin (5 Gew%) | < 5 ppm | 4,8 V |
| 4-(N,N'-Dimethylamino)pyridin (2 Gew%) | < 5 ppm | 4,4 V |
| | | |
| Tributylamin (5 Gew%) | < 5ppm | 3,4 V |

BEISPIEL 2

Oxidationsbeständigkeit der Additive aus Beispiel 1

In einer Meßzelle mit Platinarbeitselektrode, Lithiumgegenelektrode und Lithiumreferenzelektrode wurden jeweils 5 Zyklovoltammogramme hintereinander aufgenommen. Hierzu wurde, ausgehend vom Ruhepotential, das Potential zuerst mit einer Vorschubgeschwindigkeit von 10 mV/s auf 6,0 V gegen $Li/Li^+$ erhöht und im weiteren Verlauf zurück auf das Ruhepotential gefahren. Tabelle 1 zeigt die erhaltenen oxidativen Zersetzungspotentiale, die Figuren 2 bis 4 die erhaltenen Zyklovoltammogramme von 4-(N,N'-Dimethylamino)pyridin, 4-Phenylbutylamin und Tributylamin (beschrieben in der US-PS 5 846 673).

Wie den in Tabelle 1 angegebenen Ergebnissen entnommen werden kann, sind die erfindungsgemäß verwendeten Additive oxidationsbeständiger als aliphatische Amine, wie z.B. Tributylamin, und können z.B. in Lithium-Ionen-Batterien, d.h. in 4 V-Systemen, zur Verringerung des Säuregehalts in aprotischen Elektrolytsystemen eingesetzt werden.

**Patentansprüche**

**1.** Verwendung von Additiven der allgemeinen Formel (I)

$$NR^1R^2R^3 \qquad (I)$$

worin

$R^1$ und $R^2$ H, $C_yF_{2y+1-z}H_z$ oder $(C_nF_{2n-m}H_m)X$, wobei X ein aromatischer oder heterozyklischer Rest ist, bedeuten und

$R^3$ $(C_nF_{2n-m}H_m)Y$, wobei Y ein heterozyklischer Rest ist, oder $(C_oF_{2o-p}H_p)Z$, wobei Z ein aromatischer Rest ist, bedeutet,

und wobei n, m, o, p, y und z die folgenden Bedingungen erfüllen:

$0 \leq n \leq 6$,
$0 \leq m \leq 2n$,
$2 \leq o \leq 6$,
$0 \leq p \leq 2o$,
$1 \leq y \leq 8$ und

$0 \leq z \leq 2y+1$,

zur Verringerung des Säuregehalts in aprotischen Elektrolytsystemen in elektrochemischen Zellen.

**2.** Verwendung nach Anspruch 1, **dadurch gekennzeichnet, daß** $R^1$ und $R^2$ ausgewählt sind aus der Gruppe, bestehend aus H, einer Alkylgruppe, einer Aralkylgruppe und einer Arylgruppe.

**3.** Verwendung nach Anspruch 1 oder 2, **dadurch gekennzeichnet, daß** die heterozyklische Gruppe, die durch $R^1$, $R^2$ oder $R^3$ dargestellt ist, eine Pyridylgruppe oder eine Pyrazylgruppe ist.

**4.** Verwendung nach Anspruch 1 oder 2, **dadurch gekennzeichnet, daß** die aromatische Gruppe, die durch $R^3$ dargestellt ist, eine 2-Phenylethylgruppe, 2-Phenylpropylgruppe, 3-Phenylpropylgruppe, 2-Phenylbutylgruppe, 3-Phenylbutylgruppe oder 4-Phenylbutylgruppe ist.

**5.** Verwendung nach einem der Ansprüche 1 bis 4, **dadurch gekennzeichnet, daß** das Additiv ausgewählt ist aus der Gruppe, bestehend aus 2-Phenylethylamin, 2-Phenylpropylamin, 3-Phenylpropylamin, 2-Phenylbutylamin, 3-Phenylbutylamin, 4-Phenylbutylamin, 2-Phenylethyl-N-methylamin, 2-Phenylpropyl-N-methylamin, 3-Phenylpropyl-N-methylamin, 2-Phenylbutyl-N-methylamin, 3-Phenylbutyl-N-methylamin, 4-Phenylbutyl-N-methylamin, 2-Phenylethyl-N-ethylamin, 2-Phenylpropyl-N-ethylamin, 3-Phenylpropyl-N-ethylamin, 2-Phenylbutyl-N-ethylamin, 3-Phenylbutyl-N-ethylamin, 4-Phenylbutyl-N-ethylamin, 2-Phenylethyl-N,N-dimethylamin, 2-Phenylpropyl-N,N-dimethylamin, 3-Phenylpropyl-N,N-dimethylamin, 2-Phenylbutyl-N,N-dimethylamin, 3-Phenylbutyl-N,N-dimethylamin, 4-Phenylbutyl-N,N-dimethylamin, 2-Phenylethyl-N,N-diethylamin, 2-Phenylpropyl-N,N-diethylamin, 3-Phenylpropyl-N,N-diethylamin, 2-Phenylbutyl-N,N-diethylamin, 3-Phenylbutyl-N,N-diethylamin, 4-Phenylbutyl-N,N-diethylamin, N,N-Dimethylaminopyridin, N,N-Dimethylaminopyrazin, N,N-Diethylaminopyridin und N, N-Diethylaminopyrazin.

**6.** Verwendung nach einem der Ansprüche 1 bis 5, **dadurch gekennzeichnet, daß** das Additiv in einer Menge von bis zu 10 Gew% verwendet wird, bezogen auf das Gewicht des Elektrolytsystems.

**7.** Verwendung nach einem der Ansprüche 1 bis 6, **dadurch gekennzeichnet, daß** das aprotische Elektrolytsystem ein Lösungsmittel umfaßt, ausgewählt aus der Gruppe, bestehend aus Ethylencarbonat, Propylencarbonat, Butylencarbonat, Dimethylcarbonat, Diethylcarbonat, Methylethylcarbonat, γ-Butyrolacton, Methylformiat, Methylacetat, 1,2-Dimethoxyethan, Tetrahydrofuran, 2-Methyltetrahydrofuran, Dimethylsulfoxid, 1,3-Dioxolan, Formamid, Dimethylformamid, Dioxolan, Dioxan, Acetonitril, Nitromethan, einem Phosphorsäuretriester, Trimethoxymethan, einem Dioxolanderivat, Sulfolan, 3-Methyl-2-oxazolidinon, einem Propylencarbonatderivat, einem Tetrahydrofuranderivat und Gemischen davon.

**8.** Verwendung nach einem der Ansprüche 1 bis 7, **dadurch gekennzeichnet, daß** das aprotische Elektrolytsystem ein Leitsalz mit einem Anion, ausgewählt aus der Gruppe, bestehend aus $BF_4^-$, $PF_6^-$, $AsF_6^-$, $SbF_6^-$, $ClO_4^-$, $N(SO_2C_nF_{2n+1-m}H_m)_2^-$, $C(SO_2C_nF_{2n+1-m}H_m)_3^-$, $O(SO_2C_nF_{2n+1-m}H_m)^-$ und $[PF_{6-p}(C_nF_{2n+1-m}H_m)_p]^-$ mit $0 \leq n \leq 6$, $0 \leq m \leq 2n+1$ und $0 \leq p \leq 5$, umfaßt.

**9.** Elektrochemische Zelle, umfassend eine Anode, eine Kathode und ein aprotisches Elektrolytsystem, das ein Additiv der allgemeinen Formel (I), wie in Anspruch 1 angegeben, enthält.

**10.** Lithium-Ionen-Batterie, umfassend die elektrochemische Zelle nach Anspruch 9.

**11.** Doppelschichtkondensator, umfassend die elektrochemische Zelle nach Anspruch 9.

Fig. 1

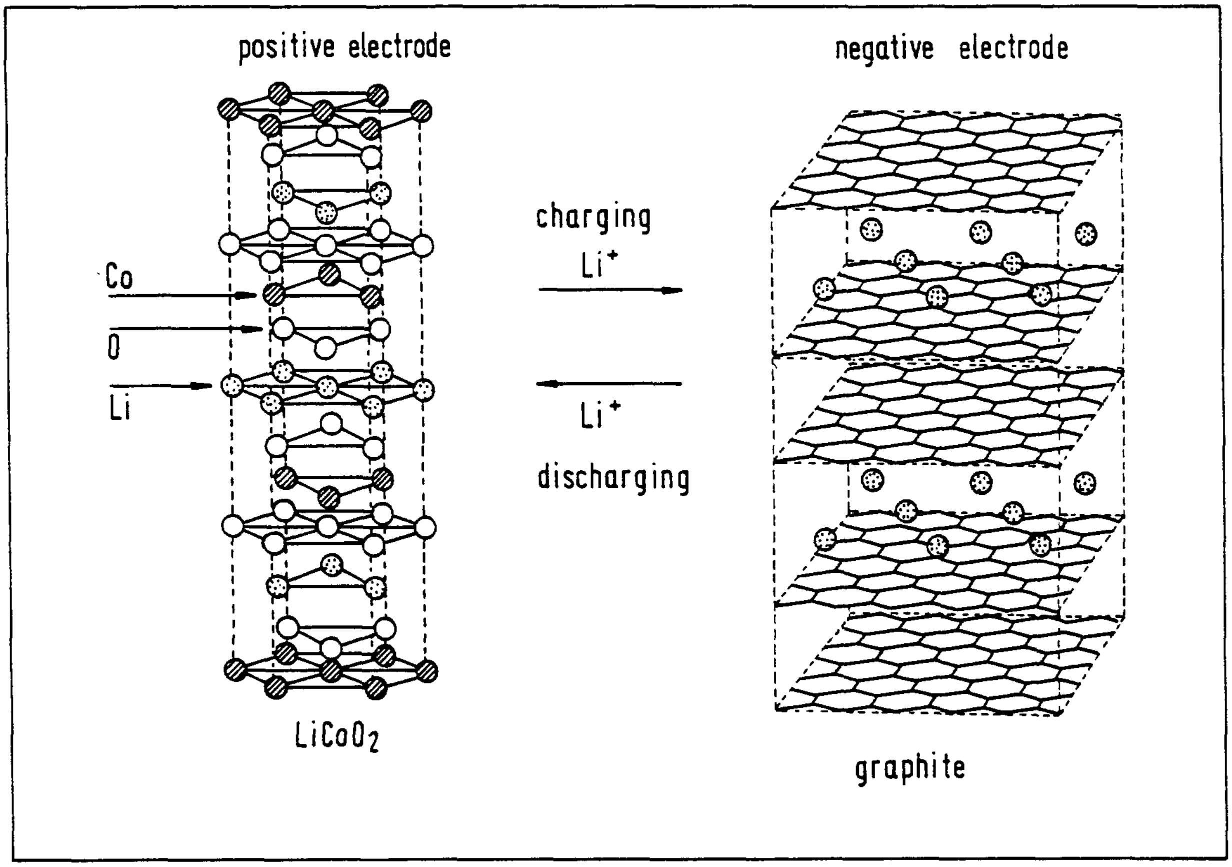
positive electrode
negative electrode
charging
Li+
Li+
discharging
Co
O
Li
LiCoO2
graphite

Fig. 2

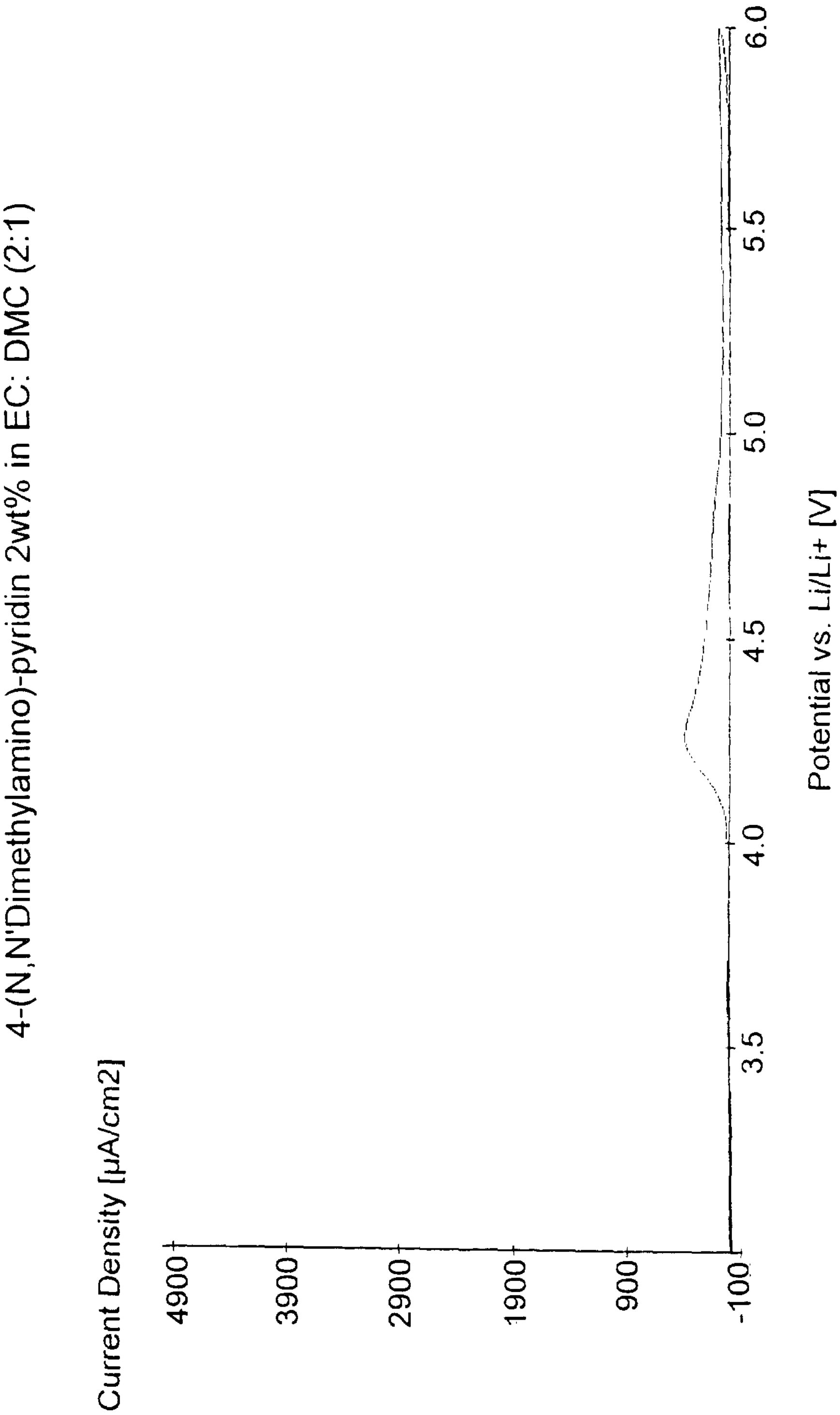
4-(N,N'Dimethylamino)-pyridin 2wt% in EC: DMC (2:1)
Current Density [µA/cm2]
4900
3900
2900
1900
900
-100
3.5
4.0
4.5
5.0
5.5
6.0
Potential vs. Li/Li+ [V]

Fig. 3

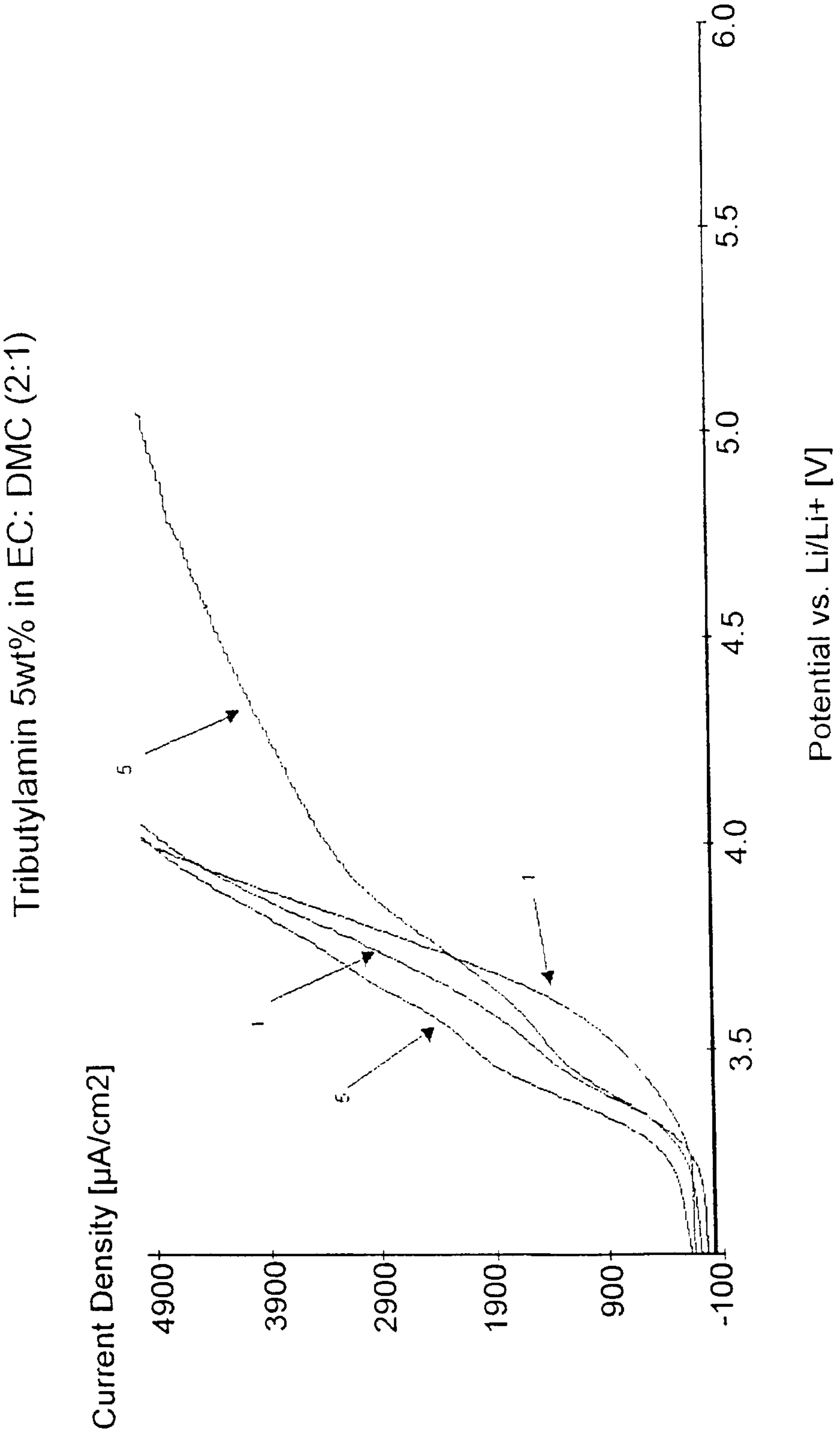
Tributylamin 5wt% in EC: DMC (2:1)
Current Density [µA/cm2]
4900
3900
2900
1900
900
-100
3.5
4.0
4.5
5.0
5.5
6.0
Potential vs. Li/Li+ [V]
5
1
1
5

Fig. 4

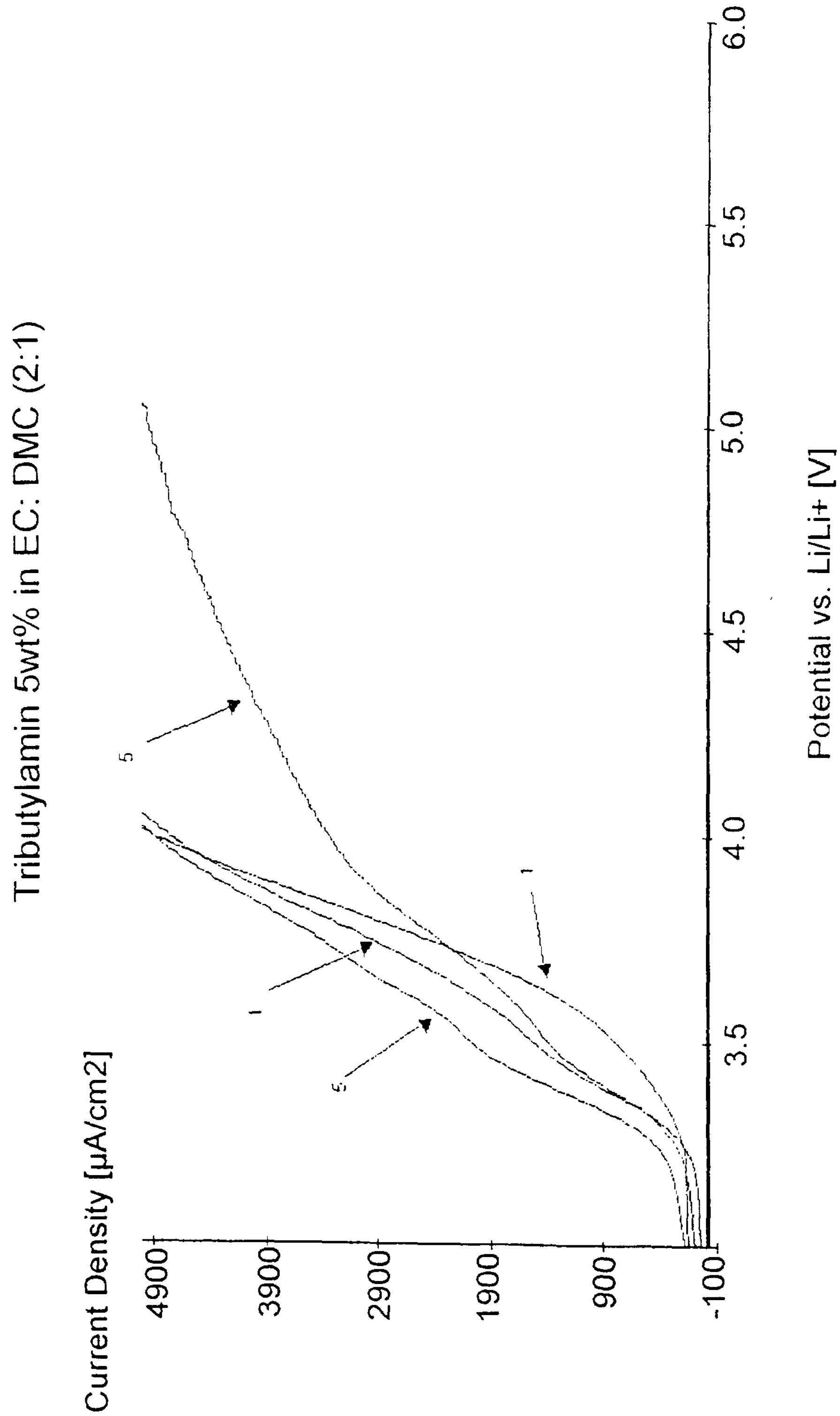
Tributylamin 5wt% in EC: DMC (2:1)
Current Density [µA/cm2]
4900
3900
2900
1900
900
-100
3.5
4.0
4.5
5.0
5.5
6.0
Potential vs. Li/Li+ [V]
5
1
1
5